## Europäisches Patentamt
## European Patent Office
## Office européen des brevets

(19)

(11) Publication number: **0 005 048**
**B1**

(12) **EUROPEAN PATENT SPECIFICATION** .

(45) Date of publication of patent specification: **30.12.81**

(51) Int. Cl.³: **F 25 B 9/02, G 05 D 23/02**

(21) Application number: **79300634.7**

(22) Date of filing: **17.04.79**

(54) Cryostat.

(30) Priority: **13.04.78 US 896012**

(43) Date of publication of application:
**31.10.79 Bulletin 79/22**

(45) Publication of the grant of the European patent:
**30.12.81 Bulletin 81/52**

(84) Designated Contracting States:
**DE FR GB SE**

(56) References cited:
**FR - A - 1 550 281**
**FR - A - 2 322 336**
**FR - A - 2 377 588**
**US - A - 3 320 755**
**US - A - 3 375 975**
**US - A - 3 833 171**

(73) Proprietor: **AIR PRODUCTS AND CHEMICALS, INC.**
**P.O. Box 538**
**Allentown, Pennsylvania 18105 (US)**

(72) Inventor: **Longsworth, Ralph Cady**
**2521 Green Acres Drive**
**Allentown Pennsylvania 18103 (US)**

(74) Representative: **Lucas, Brian Ronald**
**c/o Air Products Limited Coombe House St. George's Square**
**New Malden, Surrey (GB)**

Courier Press, Leamington Spa, England.

Cryostat

This invention relates to cryostats.

Cryostats provide refrigeration by expanding a gas under pressure through a Joule-Thompson orifice. The actual amount of refrigeration is determined *inter alia* by the flow of gas through the orifice and this has generally been controlled by sensing the presence or absence of liquid in the bottom of the cryostat. In practice, the temperature in such cryostats varies substantially with time and in order to reduce these variations it has been proposed to mount the orifice on one end (the cold end) of the stainless steel body of an elongate cryostat and regulate the flow of gas through the orifice by means of a needle attached to an Invar rod mounted fast on the other end (the warm end) of the cryostat. Whilst this arrangement gave excellent temperature control at stable ambient temperatures we discovered that the temperature control became increasingly unreliable if the ambient temperature fluctuated. Furthermore, if the orifice became blocked with ice it was necessary to allow the temperature to return to near ambient before the ice could be ejected.

In order to reduce the effect of variations caused by fluctuations in ambient temperature and, at least in preferred embodiments, reduce the problems associated with removing blockages from the orifice, we provide a cryostat having, in use, a warm end and a cold end, an orifice disposed at or adjacent said cold end and a valve member movable, in use, to regulate the flow of fluid through said orifice, a first control element associated with said orifice, a second control element associated with said valve member and having a mean coefficient of expansion (as herein defined) differing from said first control element and arranged so that, in use, as the temperature in said cryostat falls said first and second control elements move relative to one another and cause said valve member to move relative to said orifice to restrict said orifice and, as the temperature in said cryostat rises said first and second control elements more relative to one another and cause said valve member to move relative to said orifice to open said orifice characterized in that the mean coefficient of expansion (as herein defined) of said first and second control elements differs by an amount B not less than $1 \times 10^{-5}(^{\circ}K^{-1})$ and further characterized in that relative movement between said first and second control elements to move said valve member relative to said orifice is confined to an area between the cold end of the cryostat and a position halfway between the cold end and the warm end of said cryostat.

The term "mean coefficient of expansion" as used herein is equal to:

$$\frac{(L_{300} - L_{77})}{L_{300} \cdot \Delta T}$$

where

$L_{300}$ is the length of the material at 300°K;
$L_{77}$ is the length of the material at 77°K; and
$\Delta T = (300 - 77) = 223^{\circ}K$.

Preferably, the mean coefficients of expansion differ by at least $1.5 \times 10^{-5}(^{\circ}K^{-1})$; more preferably by at least $2.5 \times 10^{-5}(^{\circ}K^{-1})$ and even more preferably by at least $5 \times 10^{-5}(^{\circ}K^{-1})$.

In contrast, in prior art cryostats employing stainless steel and Invar the difference in mean coefficients of expansion is about $0.727 \times 10^{-5}(^{\circ}K^{-1})$.

The orifice may be mounted on the first control member or may form an integral part thereof. Similarly, the valve member may form an integral part of the second control member. Thus, in a preferred embodiment, the valve member has an elongate stem and a tapered tip. In this particular case the elongate stem is the second control member.

Typically, one of the first and second control members comprises stainless steel and the other comprises a plastics material, for example a polymide polymer such as PPMI (VESPEL SP 21) having a mean coefficient of expansion of $3.22 \times 10^{-5}(^{\circ}K^{-1})$. With such an arrangement the difference in coefficients of expansion is $2.4 \times 10^{-5}(^{\circ}K^{-1})$.

It will be appreciated that the relationship between expansion and temperature is not linear for many materials and the difference in the mean secondary coefficient of expansion (as herein defined) of the first and second control means is preferably at least $1 \times 10^{-5}(^{\circ}K^{-1})$ and the difference in the mean tertiary coefficient of expansion (as herein defined) is at least $0.5 \times 10^{-5}(^{\circ}K^{-1})$.

The term "mean secondary coefficient of expansion" as used herein means:

$$\frac{(L_{180} - L_{77})}{L_{180} \cdot \Delta T1}$$

where

$L_{180}$ is length at 180°K;
$L_{77}$ is length at 77°K; and
$\Delta T1$ is $(180 - 77) = 103^{\circ}K$.

The term "mean tertiary coefficient of expansion" as used herein means:

$$\frac{(L_{130} - L_{77})}{L_{130} \cdot \Delta T2}$$

where

$L_{130}$ is the length at 130°K;
$L_{77}$ is the length at 77°K; and
$\Delta T = (130 - 77) = 53°K.$

Table 1 gives some values of coefficients of expansion of various materials.

TABLE I

| | Mean coefficient of expansion 77—300°K | Mean secondary coefficient of expansion 77—180°K | Mean tertiary coefficient of expansion 77—130°K |
|---|---|---|---|
| Invar | $.136 \times 10^{-5}$ | $.1 \times 10^{-5}$ | $<.1 \times 10^{-5}$ |
| St. Steel | $.863 \times 10^{-5}$ | $.7 \times 10^{-5}$ | $.4 \times 10^{-5}$ |
| PPMI (Vespel SP—21) | $3.22 \times 10^{-5}$ | $2.4 \times 10^{-5}$ | $1.8 \times 10^{-5}$ |
| PET (Dacron) | $2.0 \times 10^{-5}$ | $1.5 \times 10^{-5}$ | $1.2 \times 10^{-5}$ |
| EFTE (Tefzel) | $6.0 \times 10^{-5}$ | $3.6 \times 10^{-5}$ | $2.8 \times 10^{-5}$ |
| PC (Lexan) | $5.0 \times 10^{-5}$ | $3.0 \times 10^{-5}$ | $1.8 \times 10^{-5}$ |
| CTFE (Kel-F) | $5.0 \times 10^{-5}$ | $3.8 \times 10^{-5}$ | $3.4 \times 10^{-5}$ |
| TFE (Teflon) | $10.0 \times 10^{-5}$ | $5.5 \times 10^{-5}$ | $4.5 \times 10^{-5}$ |

Preferably the mean coefficient of expansion of the second control member should be greater than the mean coefficient of expansion of the first control member.

In one embodiment of the invention the relative movement between the first and second control elements is inhibited at a position between the warm end and the cold end of the cryostat and the area is situated between this position and the cold end of the cryostat.

In another embodiment of the invention relative movement between the first and second control elements is inhibited at a position at or closely adjacent the cold end of the cryostat and the area extends from this position towards the warm end of the cryostat. In this latter embodiment the area may extend purely from the position to the orifice.

According to the materials selected for the first and second control elements, the distance between the position and the most remote point of the area can be as little as 0.05 inches (1.27 mm) although for manufacturing considerations this should preferably not be less than 0.1 inches (2.54 mm). On the other hand, this distance should preferably not be greater than 1.4 inches (35.6 mm) and preferably less than 0.75 inches (19 mm).

Preferably, the materials should be chosen and sized so that the function:

$$7.5 \times 10^{-5} \geqslant AL_o \geqslant 0.9 \times 10^{-5} \text{ inch } °K^{-1}$$

i.e.

$$2 \times 10^{-4} \geqslant AL_o \geqslant 0.1 \times 10^{-4} \text{ cm } °K^{-1}$$

Advantageously:

$$.25 \times 10^{-5} \geqslant AL_o \geqslant 0.9 \times 10^{-5} °K^{-1}$$

i.e.

$$6 \times 10^{-6} \geqslant AL_o \geqslant 0.1 \times 10^{-4} \text{ cm } °K^{-1}$$

Where

A is the difference in the mean coefficients of expansion of the first and second control element; and

$L_o$ is the length, at 300°K, of the control element having the greater mean coefficient of expansion.

Preferably the area is situated somewhere between the cold end of the cryostat and a position one third the distance between the cold end and the warm end of the cryostat.

For a better understanding of the invention and to show how the same may be carried into effect, reference will now be made, by way of example, to the accompanying drawings in which:

Figures 1 to 4 are longitudinal sections through part of four different embodiments of cryostat in accordance with the present invention; and

Figure 5 is a longitudinal section through a fifth embodiment of cryostat in accordance with the present invention, the left hand side of the figure showing one form of casing and the right hand side showing part of an alternative arrangement.

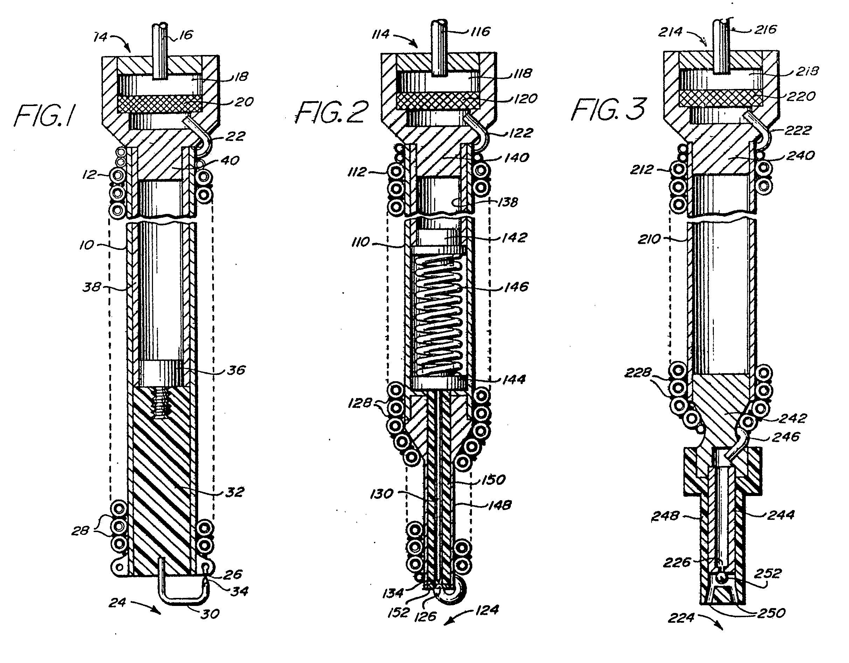

Referring to Figure 1, there is shown a cryostat comprising a stainless steel mandrel 10 (defining a first control element) around which is wound a finned tube 12. At the warm end 14 of the cryostat there is provided an inlet conduit 16 which is connected to a source (not shown) of high pressure gaseous nitrogen. Inlet conduit 16 communicates with one end of an inlet chamber 18 containing a filter 20, while connecting conduit 22 communicates with the other end of chamber 18 so that working fluid being introduced via inlet conduit 16 passes through filter 20 in chamber 18 and exits from chamber 18 via conduit 22 which is, in turn, connected to the finned tube 12. Proximate the cold end 24 of the cryostat, finned tube 12 terminates in a Joule-Thompson orifice 26 mounted fast on stainless steel mandrel 10. Normally, the cryostat is disposed in a close fitting glass Dewar (not shown) and, to ensure that returning gases expanded through the orifice 26 come into contact with the finned tube 12, thread 28 is helically wound between the succeeding convolutions of heat exchanger 12.

Proximate the cold end 24 of the cryostat, a valve member 30 is held in a plastic block 32 (defining a second control element) such that the point 34 of valve member 30 is adjacent orifice 26 to control the flow of fluid therethrough. As can be seen in the drawing, plastic block 32 is disposed within stainless steel mandrel 10 and extends for some distance from the cold end 24 of the cryostat toward the warm end 14 of the cryostat. At the end of plastic block 32 removed from the cold end 24 of the cryostat, it is retained in place by means of a threaded member 36, which in turn, is attached to one end of thin walled member 38. At the warm end 14 of the cryostat the thin walled member 38 and the stainless steel mandrel 10 are rigidly affixed to a mounting block 40. The thin walled member 38 is fabricated from stainless steel as is mandrel 10. Thus, the thin walled member 38 expands and contracts with changes in temperature substantially to the same extent as does mandrel 10, and accordingly there is substantially no difference in relative linear movement between member 38 and mandrel 10 along the length from the warm end of the cryostat 14 to the point where thin walled member 38 is attached to the plastic block 32 by means of threaded member 36. In this connection it will be noted that the distance between the warm end 14 of the cryostat and the bottom of thin walled member 38 is approximately $\frac{2}{3}$ of the total length of the cryostat. For the length of plastic block 32 from the bottom of the thin walled member 38 to the cold end 24 of the cryostat, there is a substantial relative movement along the length of the cryostat between the plastic block 32 and mandrel 10 due to their different mean coefficients of expansion.

In this particular embodiment the plastic block 32 is fabricated from polymide polymer (PPMI) and has a substantially greater mean coefficient of expansion than does the stainless steel of mandrel 10. The point 34 of valve member 30 thus moves out of and away from orifice 26 as the temperature proximate the cold end 24 of the cryostat increases; thereby permitting a greater quantity of refrigerant fluid to be expanded through the Joule-Thompson orifice 26. This results in a decrease in temperature at the cold end 24 of the cryostat. As the temperature decreases, plastic block 32 contracts at a greater rate and to a greater extent than does the portion (first control element) of the stainless steel mandrel 10 between the orifice 26 and the bottom of the thin walled member. This causes the point 34 of needle valve 30 to move into orifice 26 with a throttling effect whereby the flow of fluid through the orifice 26 is reduced.

In this embodiment it will be noted that the plastic block 32 is located completely above the level of orifice 26, thereby ensuring that the plastic block 32 does not come into contact with any of the normal inventory of liquid refrigerant contained in the Dewar flask proximate the cold end 24 of the cryostat. Further, it will be noted that the plastic block 32 extends for a significant distance toward the warm end 14 of the cryostat; thus, in fact, sensing a temperature related to the expanded returning refrigerant gas, which is believed to be an accurate temperature for control of the cryostat.

Reference is now made to Figure 2 of the drawing which illustrates another embodiment of the invention. In this figure, components similar to those described in Figure 1 are identified by similar numbers but with the prefix '1'. Thus, the cryostat comprises a stainless steel mandrel 110, a finned tube 112 and, at the warm end 114, there is an inlet conduit 116, an inlet chamber 118 containing a filter 120 and a connecting conduit 122 providing communication from chamber 118 to finned tube 112. Proximate the cold end 124 of the cryostat is located Joule-Thompson orifice 126 and valve member 130 with its point 134 adjacent orifice 126. The cryostat of this embodiment is also provided with a thread 128 helically wound between the succeeding convolutions of finned tube 112. Proximate the warm end 114 there is located mounting block 140 to which are attached both stainless steel mandrel 110 and stainless steel thin walled member 138. At the lower end of thin walled member 138, i.e. the end toward the cold end 124 of the cryostat, and attached thereto is spring retaining member 142. At its upper end, valve member 130 is provided with a spring retaining head 144. Disposed between spring retaining member 142 and spring retaining head 144 is coil spring 146 maintained in a state of compression thereby biasing needle valve 130 downwardly and urging the point 134 thereof towards orifice 126.

Located within mandrel extension 148 (first control element) is plastic cylinder 150 (second control element). The lower end of plastic cylinder 150 is disposed so as to bear against shoulders 152 located fast on the lower end of mandrel extension 148 at the level of orifice 126, while the upper end of plastic cylinder 150 bears against the under-surface of spring retaining head 144 of valve member 130 (which also comprises the second control element). Upon an increase in temperature, plastic cylinder 150 expands more than mandrel extension 148 thereby compressing coil spring 146, raising spring retaining head 144 and removing the point 134 of valve member 130 from the Joule-Thompson orifice 126. This is effective to increase the flow of fluid through the orifice 126 thus reducing the temperature proximate the cold end 124 of the cryostat. Upon a reduction in temperature, plastic cylinder 150 contracts and coil spring 146 bearing against spring retaining head 144 urges valve member 130 downwardly with the point thereof effecting a throttling action upon Joule-Thompson orifice 126, thus reducing the flow of fluid therethrough.

It will be noted that the first and second control elements extend approximately $\frac{1}{3}$ the total length of the cryostat.

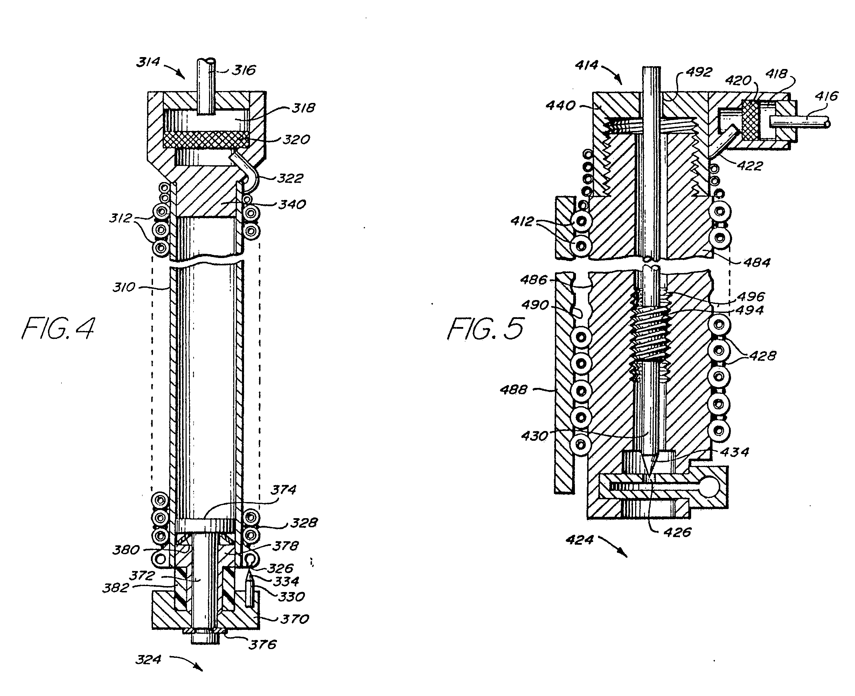

Reference is now made to Figure 3 of the drawing which illustrates yet another embodiment of the invention. In this figure, components similar to those described in Figure 1 are identified by similar numbers prefixed with the number '2'. Thus, this cryostat comprises a mandrel 210, a finned tube 212 and, at the warm end 214, there is an inlet conduit 216, an inlet chamber 218 containing a filter 220 and connecting conduit 222 providing communication from inlet chamber 218 to finned tube 212. As in previously described embodiments, the mandrel 210 is affixed to block 240, and the finned tube 212 is wrapped with thread 228 to ensure that expanded gases come into contact with the surface of finned tube 212.

Proximate the cold end 224 of the cryostat of this embodiment, there is attached to the lower end of mandrel 210 a stainless steel common mounting block 242. Affixed to common mounting block 242 is hollow cylindrical stainless steel member 244 (first control element) which is provided with Joule-Thompson orifice 226 at the end thereof remote from block 242. Cooled, but unexpanded refrigerant from finned tube 212 is passed to the interior of hollow cylindrical member 224 by means of exit conduit 246. Also, sealingly affixed to common mounting block 242 and disposed coaxially about hollow cylindrical member 244 in cylindrical sensing element 248 (second control element). As can be seen from Figure 3, the end of sensing element 248 remote from mounting block 242 is closed except for ports 250. Thus, the path of the working fluid in the cryostat proximate the cold end 224 thereof proceeds from finned tube 212 through exit conduit 246, the interior of hollow cylindrical member 244 and is expanded through Joule-Thompson orifice 226 after which the expanded fluid exits through ports 250 in sensing element 248. Positioned within cylindrical sensing element 248 and disposed proximate Joule-Thompson orifice 226 is ball valve 252. In operation, an increase in temperature causes a greater expansion in cylindrical sensing element 248 than in hollow cylindrical member 244 whereby the bottom of sensing element 248 moves away from Joule-Thompson orifice 226 permitting ball valve 252 to be removed from orifice 226 and allowing an increase flow of refrigerant through the expansion orifice 226 thus causing a reduction in temperature. Upon a decrease in temperature, sensing element 248 contracts more rapidly than does hollow cylindrical member 244 and the bottom of sensing element 248 forces ball valve 252 into the orifice 226, thereby effecting throttling of refrigerant flow therethrough.

Referring now to Figure 4, still another embodiment of the invention can be seen. Again, components similar to those described in Figure 1 are identified by similar numbers prefixed by the number '3'. Thus, this cryostat comprises a stainless steel mandrel 310, a finned tube 312 and, at the warm end 314, there is an inlet conduit 316 communicating with inlet chamber 318, which contains filter 320, and connecting conduit 322 providing communication from inlet chamber 318 to finned tube 312. Proximate the cold end 324, there is located a Joule-Thompson orifice 326 attached to mandrel 310, a thread 328 wrapped about finned tube 312 to direct the flow of expanding gas and a valve member 330 with its point 334 disposed proximate Joule-Thompson orifice 326. As in previous embodiments, the mandrel 310 is affixed to mounting block 340 proximate the warm end 314 of the cryostat.

At the cold end 324 of the cryostat it will be seen that valve member 330 is affixed to stainless steel valve mounting block 370 (second control element). An operating rod 372 having an expanded head at its upper end, i.e. toward the warm end 314 of the cryostat, is disposed coaxially relative to mandrel 310 with its upper end and head 374 positioned within mandrel 310. Rod 372 passes through valve mounting block 370 with its lower end extending beyond valve mounting block 370. Also, at the lower end of operating rod 372, a circlip 376 is affixed about operating rod 372 so as to bear against the lower surface of valve mounting block 370 and prevent downward movement thereof relative to operating rod 372. At the lower end of mandrel 310, i.e. proximate the cold end 324 of the cryostat, there is located a shoulder member 378 extending radially inward on the interior of mandrel 310 and disposed beneath the expanded head 374 of operating rod 372. Disposed intermediate the upper surface of shoulder member 378 and the lower surface of head 374 is spring member 380 which bears against both the head 374 and the shoulder 378 urging operating rod 372 and block 370 upwardly. Disposed between the lower surface of shoulder member 378 and the upper surface of block 370 and positioned coaxially about operating rod 372 is hollow cylindrical plastic cylinder 382 (first control element). The upward biasing of spring member 380 keeps the plastic cylinder 382 in a state of slight compression, such that upon an increase in temperature, plastic cylinder 382 extends between shoulder member 378 and block 370 , moving block 370 and valve member 330 downwardly more, and faster, than valve member 330 expands thereby removing the point 334 of the valve member from the orifice 326 permitting a greater flow of fluid therethrough, thereby effecting a reduction in the temperature. Upon a reduction in temperature, plastic cylinder 382 contracts and through the upward biasing of spring member 380, operating rod 372 moves upwardly carrying block 370 and needle valve 330 upwardly, whereby the point 334 of valve member 330 is moved into orifice 326 effecting a throttling action and a reduction in the flow of refrigerant through the orifice 326.

In the embodiments of the invention illustrated in the other figures of the drawing, it will be noticed that the second control element is positioned intermediate the plane of the orifice and the warm end of the cryostat. In the embodiment of this Figure 4, however, the second control element 382 extends between the Joule-Thompson orifice 326 and the cold end 324 of the cryostat.

Referring to Figure 5 it will be noted that there is a slight variation in the orientation of components at the warm end 414 of the cryostat. Thus, instead of being positioned generally axially with the cryostat, the inlet conduit 416 and the inlet chamber 418 are disposed transversely to the longitudinal axis of the cryostat. As in the previous embodiments of the invention, a filter 420 is disposed within inlet chamber 418, and the inlet chamber 418 is connected to finned tube 412 by means of connecting conduit 422.

This embodiment also differs significantly from previously described embodiments in that a hollow cylindrical plastic mandrel 484 is employed instead of the more traditional stainless steel mandrel such as is identified by reference 10 in Figure 1. As is shown in Figure 5, plastic mandrel 484 is threaded into mounting block 440 at the warm end 414 of the cryostat. As with previously illustrated embodiments, the finned tube 412 is wrapped about the mandrel 484, but is positioned within depressions 486 disposed in the form of a helix in the outer surface of mandrel 484.

In Figure 5 alternative embodiments are illustrated wherein a thread 428 is shown wrapped exteriorly about finned tube 412 on the right side of the figure to perform the usual function of directing expanded refrigerant through the helical path about finned tube 412. In the other embodiment shown to the left of Figure 5, a casing member 488 is shown disposed about the exterior of the finned tube 412. The casing member 488 is also provided with depressions along its interior wall disposed in the form of a helix and sized to conform with the shape of finned tube 412 such that, in cooperation with the corresponding helical depression in plastic mandrel 484, it operates to direct expanded gases through the fins of finned tube 412. Casing member 488 is fabricated from the same material as plastic mandrel 484 (first control element) although it could be fabricated from a material having substantially the same expansion characteristics. In assembling a cryostat of this embodiment, the casing member 488 is conveniently taped and threaded over finned tube 412 wrapped about mandrel 484.

Referring now to the cold end 424 of the cryostat, it will be seen that finned tube 412 terminates in a Joule-Thompson orifice 426 mounted on mandrel 484. Positioned within mandrel 484 is needle valve 430 (second control element) with the point 434 thereof disposed proximate Joule-Thompson orifice 426. As is shown in Figure 5, needle valve 430 extends through the length of the cryostat and passes through an opening 492 in the top of mounting block 440. Intermediate its ends, needle valve 430 is provided with a threaded portion 494 which is engaged in and cooperates with the threaded portion 496 of the interior of mandrel 484. Through the cooperation of threaded portions 494 and 496, needle valve 430 is affixed to mandrel 484 and the positioning of the point 434 relative to Joule-Thompson orifice 426 can be adjusted.

In operation, the effective operable length is described by the portion of valve member 430 from the bottom of its threaded portion 494 to its point 434, and the corresponding portion of mandrel 484 between the bottom of threaded portion 494 and the Joule-Thompson orifice 426. Accordingly, as working fluid is expanded through the Joule-Thompson orifice 426 and a reduction in temperature is effected, the effective operable length of plastic mandrel 484 contracts to a greater extent than the effective operable length of valve mandrel 430. This effects relative movement of the point 434 of valve mandrel 430 toward and into Joule-Thompson orifice 426 and provides throttling action to reduce the flow of refrigerant through the orifice 426. Conversely, an increase in temperature results in a greater expansion of the effective operable length of plastic mandrel 484 than the effective operable length of needle valve 430 thereby removing the point 434 of valve 430 from Joule-Thompson orifice 426 thereby permitting an increased flow of refrigerant.

## Claims

1. A cryostat having, in use, a warm end (14, 114, 214, 314, 414) and a cold end (24, 124, 224, 324, 424), an orifice (26, 126, 226, 326, 426) disposed at or adjacent said cold end and a valve member (30, 130, 252, 330, 430) movable, in use, to regulate the flow of fluid through said orifice, a first control element (10, 148, 244, 382, 484) associated with said orifice, a second control element (32, 150, 248, 370, 430) associated with said valve member and having a mean coefficient of expansion differing from said first control element and arranged so that, in use, as the temperature in said cryostat falls said first and second control elements move relative to one another and cause said valve member to move relative to said orifice to restrict said orifice and, as the temperature in said cryostat rises said first and second control elements move relative to one another and cause said valve member to move relative to said orifice to open said orifice characterized in that the mean coefficient of expansion of said first and second control elements differs by an amount B not less than $1 \times 10^{-5}(^\circ K^{-1})$ and further characterized in that relative movement between said first and second control elements to move said valve member relative to said orifice is confined to an area between the cold end of the cryostat and a position halfway between the cold end and the warm end of said cryostat, the term "mean coefficient of expansion" as used herein being equal to:

$$\frac{(L_{300} - L_{77})}{L_{300} \cdot \Delta T}$$

where
$L_{300}$ is the length of the material at 300°K;
$L_{77}$ is the length of the material at 77°K; and
$\Delta T = (300 - 77) = 223°K$.

2. A cryostat according to Claim 1, characterized in that B is not less than $1.5 \times 10^{-5}(^\circ K^{-1})$.

3. A cryostat according to Claim 1 or 2, characterized in that B is not less than $2.5 \times 10^{-5}(^\circ K^{-1})$.

4. A cryostat according to Claim 1, 2 and 3, characterized in that B is not less than $5 \times 10^{-5}(^\circ K^{-1})$.

5. A cryostat according to any preceding claim, characterized in that said orifice and said first control member are integral.

6. A cryostat according to any preceding claim, characterized in that said valve member and said second control member are integral.

7. A cryostat according to any preceding claim, characterized in that the mean coefficient of expansion of said second control member is greater than the mean coefficient of expansion of said first control member.

8. A cryostat according to any preceding claim, characterized in that relative movement between said first and second control elements is inhibited at a position between said warm end and said cold end of said cryostat and said area is situated between said position and the cold end of said cryostat.

9. A cryostat according to any of Claims 1 to 7, characterized in that relative movement between said first and second control elements is inhibited at a position at or closely adjacent the cold end of said cryostat and said area extends from said position towards the warm end of said cryostat.

10. A cryostat according to Claim 9, characterized in that said area extends from said position to said orifice.

11. A cryostat according to any preceding claim, characterized in that the effective operable length i.e. the distance between the said position and the most remote point of the said area, of said first and/or second control member is not less than 0.05 inches (1.27 mm).

12. A cryostat according to any preceding claim, characterized in that the amount $BL_o$ is not less than $4 \times 10^{-6}$ inch $(1 \times 10^{-5}cm)$ $^\circ K^{-1}$ where $L_o$ is the effective operable length of the control member with the greater coefficient of expansion.

## Revendications

1. Cryostat comprenant, en utilisation, une extrémité chaude (14, 114, 214, 314, 414) et une extrémité froide (24, 124, 224, 324, 424), un orifice (26, 126, 226, 326, 426) disposé contre ou adjacent à ladite extrémité froide et un organe de soupape (30, 130, 252, 330, 430) mobile, en utilisation, en vue de réguler le courant de liquide passant par ledit orifice, un premier élément de commande (10, 148, 244, 382, 484) associé audit orifice, un second élément de commande (32, 150, 248, 370, 430) associé audit organe de soupape et dont le coefficient de dilatation moyen est différent de celui dudit premier élément de commande et disposé de manière qu'en utilisation et à mesure que la température dans le cryostat tombe, lesdits premier et second éléments de commande se déplacent relativement l'un à l'autre et amènent ledit organe de soupape à se déplacer par rapport audit orifice de manière à réduire ledit orifice, et lorsque la température dans ledit cryostat monte, lesdits premier et second éléments de commande se déplacent l'un par rapport à l'autre et amènent ledit organe de soupape à se déplacer par rapport audit orifice de manière à ouvrir cet orifice, caractérisé en ce que le coefficient de dilatation moyen desdits premier et second éléments de commande diffère d'une quantité B qui n'est pas inférieure à $1 \times 10^{-5}(°K^{-1})$ et en ce que le mouvement relatif entre lesdits premier et second éléments de commande qui déplace ledit organe de soupape par rapport audit orifice est limité à une région entre l'extrémité froide du cryostat et une position à mi-chemin entre l'extrémité froide et l'extrémité chaude dudit cryostat, le "coefficient de dilatation moyen" étant égal à:

$$\frac{(L_{300} - L_{77})}{L_{300} \cdot T}$$

où

$L_{300}$ est la longueur de matériau à 300°K;
$L_{77}$ est la longueur du matériau à 77°K; et
$T = (300 - 77) = 223°K.$

2. Cryostat selon la revendication 1, caractérisé en ce que B n'est pas inférieur à $1,5 \times 10^{-5}(°K^{-1})$.

3. Cryostat selon la revendication 1 ou 2, caractérisé en ce que B n'est pas inférieur à $2,5 \times 10^{-5}(°K^{-1})$.

4. Cryostat selon les revendications 1, 2 et 3, caractérisé en ce que B n'est pas inférieur à $5 \times 10^{-5}(°K^{-1})$.

5. Cryostat selon l'une quelconque des revendications précédentes, caractérisé en ce que ledit orifice et ledit premier organe de commande sont en une seule pièce.

6. Cryostat selon l'une quelconque des revendications précédentes, caractérisé en ce que ledit organe de soupape et ledit second organe de commande sont en une seule pièce.

7. Cryostat selon l'une quelconque des revendications précédentes, caractérisé en ce que le coefficient de dilatation moyen dudit second organe de commande est plus important que le coefficient de dilatation moyen dudit premier organe de commande.

8. Cryostat selon l'une quelconque des revendications précédentes, caractérisé en ce que le mouvement relatif entre lesdits premier et second éléments de commande est inhibé dans une position entre ladite extrémité chaude et ladite extrémité froide dudit cryostat et ladite région est située entre ladite position et l'extrémité froide dudit cryostat.

9. Cryostat selon l'une quelconque des revendications 1 à 7, caractérisé en ce que le mouvement relatif entre lesdits premier et second éléments de commande est inhibé dans une position contre ou étroitement adjacente de l'extrémité froide dudit cryostat et ladite région s'étend à partir de ladite position en direction de l'extrémité chaude dudit cryostat.

10. Cryostat selon la revendication 9, caractérisé en ce que ladite région s'étend à partir de ladite position jusqu'audit orifice.

11. Cryostat selon l'une quelconque des revendications précédentes, caractérisé en ce que la longueur de manoeuvre effective, c'est-à-dire la distance entre ladite position et le point le plus éloigné de ladite région, dudit premier et/ou second élément de commande n'est pas inférieure à 1,27 mm.

12. Cryostat selon l'une quelconque des revendications précédentes, caractérisé en ce que la quantité $BL_0$ n'est pas inférieure à $1 \times 10^{-5}cm \ °K^{-1}$ où $L_0$ est la longueur de manoeuvre effective de l'organe de commande ayant la coefficient de dilatation le plus important.

**Patentansprüche**

1. Kryostat mit einem bei Betrieb warmen Ende (14, 114, 214, 314, 414) und einem kalten Ende (24, 124, 224, 324, 424), einer Öffnung (26, 126, 226, 326, 426), die am oder nahe am kalten Ende angeordnet ist, sowie einem Ventilglied (30, 130, 252, 330, 430), das bei Betrieb verstellt wird, um die Strömung des Strömungsmittels durch diese Öffnung zu steuern, einem ersten Steuerelement (10, 148, 244, 382, 484), dem diese Öffnung zugeordnet ist, einem zweiten Steuerelement (32, 150, 248, 370, 430), dem dieses Ventilglied zugeordnet ist und das einen Ausdehnungskoeffizienten aufweist, der sich von dem des ersten Steuerelements unterscheidet, wobei die Anordnung so getroffen ist, daß, wenn bei Betrieb des Kryostaten die Temperatur abfällt, sich das erste und das zweite Steuerelement gegenüber einander bewegen und dem Ventilglied eine solche Bewegung gegenüber der Öffnung erteilen, daß die Öffnung verkleinert oder geschlossen wird, und wenn die Temperatur in dem Kryostaten ansteigt, sich das erste und das zweite Steuerelement gegenüber einander bewegen und dem Ventilglied eine solche Bewegung gegenüber der Öffnung erteilen, daß die Öffnung geöffnet oder vergrößert wird, dadurch gekennzeichnet, daß die mittleren Ausdehnungskoeffizienten des ersten und des zweiten Steuerelements sich um einen Betrag B von nicht weniger als $1 \times 10^{-5}(°K^{-1})$ voneinander unterscheiden, und daß ferner die gegenseitige Bewegung des ersten und des zweiten Steuerelements, um dem Ventilglied eine Bewegung gegenüber der Öffnung zu erteilen, auf einen Bereich zwischen dem kalten Ende des Kryostaten und einer Position in der Mitte zwischen dem kalten Ende und dem warmen Ende des Kryostaten beschränkt ist, wobei die hier benutzte Bezeichnung "mittlerer Ausdehnungskoeffizient"

$$\frac{(L_{300} - L_{77})}{L_{300} \cdot \Delta T}$$

entspricht, wobei

$L_{300}$ die Länge des Materials bei 300° Kelvin;
$L_{77}$ die Länge des Materials bei 77° Kelvin;
and

$\Delta T = (300 - 77) = 223°$ Kelvin
bedeuten.

2. Kryostat nach Anspruch 1, dadurch gekennzeichnet, daß B nicht weniger als $1,5 \times 10^{-5}(°K^{-1})$ beträgt.

3. Kryostat nach Anspruch 1 oder 2, dadurch gekennzeichnet, daß B nicht weniger als $2,5 \times 10^{-5}(°K^{-1})$ beträgt.

4. Kryostat nach Anspruch 1, 2 oder 3, dadurch gekennzeichnet, daß B nicht weniger als $5 \times 10^{-5}(°K^{-1})$ beträgt.

5. Kryostat nach einem der vorstehenden Ansprüche, dadurch gekennzeichnet, daß die Öffnung und das erste Steuerelement integriert sind.

6. Kryostat nach einem der vorstehenden Ansprüche, dadurch gekennzeichnet, daß das Ventilglied und das zweite Steuerelement integriert sind.

7. Kryostat nach einem der vorstehenden Ansprüche, dadurch gekennzeichnet, daß der mittlere Ausdehnungskoeffizient des zweiten Steuerelements größer ist als der mittlere Ausdehnungskoeffizient des ersten Steuerelements.

8. Kryostat nach einem der vorstehenden Ansprüche, dadurch gekennzeichnet, daß die gegenseitige Bewegung zwischen dem ersten und dem zweiten Steuerelement in einer Position zwischen dem warmen Ende und dem kalten Ende des Kryostaten angehalten wird und dieser Bereich zwischen dieser Position und dem kalten Ende des Kryostaten liegt.

9. Kryostat nach einem der Ansprüche 1 bis 7, dadurch gekennzeichnet, daß die gegenseitige Bewegung zwischen dem ersten und dem zweiten Steuerelement in einer Position an oder nahe dem kalten Ende des Kryostaten angehalten wird und dieser Bereich sich von dieser Position zu dem warmen Ende des Kryostaten erstreckt.

10. Kryostat nach Anspruch 9, dadurch gekennzeichnet, daß dieser Bereich sich von dieser Position zu der Öffnung erstreckt.

11. Kryostat nach einem der vorstehenden Ansprüche, dadurch gekennzeichnet, daß die tatsächlich wirksame Länge, d.h. der Abstand zwischen dieser Position und dem am weitesten entfernten Punkt dieses Bereichs, des ersten und/oder zweiten Steuerelements nicht weniger als 0,05 Zoll (1,27 mm) beträgt.

12. Kryostat nach einem der vorstehenden Ansprüche, dadurch gekennzeichnet, daß der Betrag $BL_o$ nicht weniger als $4 \times 10^{-6}$ Zoll ($1 \times 10^{-5}$cm°$K^{-1}$) beträgt, wobei $L_o$ die tatsächlich wirksame Länge des Steuerelements mit dem größeren Wärmeausdehnungskoeffizienten bedeutet.

FIG. 1

FIG. 2

FIG. 3

FIG. 5

FIG. 4